# EUROPÄISCHE PATENTANMELDUNG

(11) **EP 1 371 296 A1**
(43) Veröffentlichungstag der Anmeldung: **17.12.2003**
(21) Anmeldenummer: 03010857.5
(22) Anmeldetag: 15.05.2003
(51) Int. Cl.: A23L 1/164, A23L 1/212

(54) **Verfahren zur Herstellung einer Getreidefruchtmischung**

(30) Priorität: 14.06.2002 DE 10226553
(71) Anmelder: Dr. AUGUST OETKER NAHRUNGSMITTEL KG, 33617 Bielefeld (DE)
(72) Erfinder: Merten, Kati, 33602 Bielefeld (DE); Dittmann, Dirk, 33649 Bielefeld (DE); Rüsing, Thomas, 33647 Bielefeld (DE)
(74) Vertreter: Meyer, Gerd

(57) **Zusammenfassung**

In der vorliegenden Patentanmeldung wird ein Verfahren zur Herstellung einer Getreidefruchtmischung beschrieben, die dadurch gekennzeichnet ist, daß die zu verwendenden Früchte frisch oder tiefgefroren sind und vor dem Zumischen zur Getreidemischung in einer Zuckerartenlösung eingelegt sind.

## Beschreibung

Die in Getreidefruchtmischungen, insbesondere Müsli, enthaltenden Früchte sind in aller Regel hart und völlig durchgetrocknet, was damit zusammenhängt, dass zum einen die Früchte bereits in trockenem Zustand der Getreidemischung zugefügt werden und andererseits dann noch die Restfeuchte durch die trockenen Getreideflocken aufgenommen wird. Dass bei einem solchen Prozess kaum Geschmacksstoffe an das diese Mischung enthaltenen Getreide abgegeben werden, versteht sich von selbst. Darüber hinaus sind verschiedene Fruchtarten, wie z.B. Johannisbeeren, Blaubeeren, Erdbeere und andere Beerenfrüchte nach dem bisher bekannten Verfahren nicht geeignet, Getreidefruchtmischungen, nämlich Müsli, beigegeben zu werden, ohne dass es zu erheblichen Qualitätsverlusten kommt. Mit dem Verfahren gemäß der europäischen Patentschrift 0 546 350 wird versucht, die vorstehend geschilderten Nachteile zu beseitigen und die Weichheit des Fruchtmaterials weitgehendst zu erhalten. Dies geschieht dadurch, dass eine Glycerinlösung verwendet wird, die auf 100 Teile Trockenobst 0,05 - 0,5 Teile Enzyme enthalten und man das Obst in Kontakt mit der Glycerinlösung bei einer Temperatur von 40 - 60 °Celsius solange inkubieren lässt, bis das Obst mindestens 10 % Glycerin absorbiert hat. Ähnliche Verfahren werden in der WO-A-9100022 und der DE-A-1692206 beschrieben, nämlich die Verwendung von Carbohydrasen. Diese Vorgehensweise bedeutet zusätzliche Verfahrensschritte, nämlich das Trocknen der zu verwendenden Früchte, das Ansetzen der Glycerinlösung sowie das Inkubieren des Glycerins mit den Früchten. Zusätzlich entstehen durch die Verwendung von Glycerin selbstverständlich Zusatzkosten bei der Herstellung des Endproduktes.

Aufgabe der vorliegenden Erfindung ist es, ein Endprodukt zu schaffen, das weiche Früchte ohne Fremdzusatz enthält und dessen Geschmack das bisher Erreichte weit übertrifft sowie weitgehend die Farbe der Früchte erhalten bleibt. Die Lösung dieser Aufgabe geschieht durch den Hauptanspruch 1. Alternativlösungen ergeben sich aus den weiteren Ansprüchen.

Vorschlagsgemäß werden die (frischen- TK) Früchte, soweit sie einen Durchmesser von 1,5 bis 2 cm überschreiten, in entsprechenden Grössen zerkleinert.
Die vorbereiteten Früchte werden durch Zugabe von Zuckerartenlösungen, vorzugsweise Saccharose- oder Glucosesiruplösung, des weiteren durch mögliche Zugaben von Geschmacksstoffen, Genusssäuren und/oder Gelierund Verdickungsmittel zu einer spezifischen Fruchtzubereitung verarbeitet.

Die Vorbehandlungen gewährleisten, dass das authentische Aussehen, die Konsistenz bzw. Textur sowie der Geschmack weitgehend erhalten bleiben.

Die zubereiteten Früchte werden zusammen mit der Einlegelösung, in der sich die Geschmacksstoffe und auch Farbstoffe der Früchte gesammelt haben, der Getreidemischung zugegeben.
Bei der Getreidemischung im Sinne der vorliegenden Erfindung handelt es sich um Getreide und/oder Getreideerzeugnisse, wie sie auch bei handelsüblichen Müsli-Mischungen Verwendung finden.
Die Getreidemischungen können neben flockierten oder gequetschten Speisegetreidearten (vorzugsweise Haferflocken) auch aus hochverarbeiteten, speziellen Getreideerzeugnissen, die z.B. durch Extrudieren, Flockieren, Rösten usw. entstanden sind (vorzugsweise so genannte Cerealien, wie z.B. Cornflakes, Extrudate, Puffgetreide etc.) bestehen, wobei der Anteil an Cerealienbestandteilen überwiegen kann.

Die Zugabe der Fruchtzubereitung zu der Getreide- oder Cerealienmischung bewirkt, dass die Geschmacksstoffe der Früchte von der Getreidemischung angenommen werden.
Diese Getreide-Frucht-Mischung wird sodann geröstet bis beim Endpunkt ein Restwassergehalt von zwischen 1 bis 7 % Restfeuchte vorliegt.

Durch die Verwendung der wie oben beschrieben, zubereiteten Früchte und das Rösten derselben zusammen mit der Getreidemischung bleibt die Fruchtfarbe und der Fruchtgeschmack überraschenderweise weitgehendst erhalten. Durch das neue Verfahren ist es auch möglich, so genannte Problemfrüchte, wie Erdbeeren, Johannisbeeren, Blaubeeren und dergleichen auf schonendste Weise zu verarbeiten.

## Patentansprüche

1. Verfahren zur Herstellung einer Getreidefruchtmischung, **dadurch gekennzeichnet, dass** die zu verwendenden Früchte frisch oder tiefgefroren sind und vor dem Zumischen zur Getreidemischung in einer Zuckerartenlösung eingelegt sind.

2. Verfahren **dadurch gekennzeichnet, dass** dieverwendeten Früchte auch Geschmacksstoffe, Genusssäuren und/oder auch Gelier- und Verdickungsmittel zugegeben werden können (Fruchtzubereitung).

3. Verfahren zur Herstellung von Getreidefruchtmischungen nach den vorhergehenden Ansprüchen, **dadurch gekennzeichnet, dass** die Früchte, deren Durchmesser mehr als 1,5 bis 2 cm beträgt, in vorhergegebenen Grössen zerteilt werden.

4. Verfahren zur Herstellung von Getreidefruchtmischungen nach den vorhergehenden Ansprüchen, **dadurch gekennzeichnet, dass** die Früchte zusammen mit der Fruchtmischung auf einen Restwassergehalt von 1 - 7 % bezogen auf die Gesamtmasse getrocknet werden.

5. Getreidefruchtmischung, nämlich Müsli, **dadurch gekennzeichnet, dass** zu dessen Herstellung Früchte ohne vorhergehende Trocknung verwendet werden.
